# EUROPEAN PATENT APPLICATION

(11) **EP 3 370 406 A1**
(43) Date of publication of application: **05.09.2018**
(21) Application number: 18159159.5
(22) Date of filing: 28.02.2018
(51) Int. Cl.: H04N 1/393, H04N 1/60

(54) **METHOD OF PRINTING A RASTER IMAGE**

(30) Priority: 03.03.2017 EP 17159183
(71) Applicant: OCE Holding B.V., 5914 CA Venlo (NL)
(72) Inventor: STOLBOWSKY, Nicolas, 5914 CA Venlo (NL)
(74) Representative: OCE IP Department

(57) **Abstract**

A method of printing a raster image (10') on a printer which has at least two print modes for printing with different print resolutions, the method comprising the steps of;
- segmenting an image (10) to be printed into segments (16, 18) that comprise a first segment (16) and a second segment (18), the first segment having a higher resolution than the second segment; and
- printing the first and second segments (16, 18) in different print modes.

## Description

### BACKGROUND OF THE INVENTION

### 1. Field of the invention

The invention relates to a method of printing a raster image on a printer which has at least two print modes for printing with different print resolutions.

### 2. Description of the Related Art

It is known that many digital printers, such as ink jet printers for example, can be set to operate in different print modes which provide different print resolutions.

In many cases the physical design of the printer enables the printer to print with a relatively high resolution, e. g.1200 dpi, whereas a lower resolution e.g. 600 dpi or 300 dpi, is used in the print mode or print modes in which the printer is actually operated. Then, the image can be considered to be composed of micro-pixels which have a size corresponding to the maximally possible resolution (1200 dpi), and when the printer is operated in a 600 dpi mode, for example, a macro-pixel with the size corresponding to the 600 dpi resolution is composed of four micro-pixels. The printing elements of the printer may then be controlled such that, for example, all four micro-pixels of the macro-pixel have the same color density value, which reduces the actual print resolution to 600 dpi. As an alternative, different density values may be assigned to the four micro-pixels in order to more finely control the effective color density of the macro-pixel.

In a scanning type printer, the print resolution may also be varied by varying the scanning speed so that, when the printing elements are controlled to print ink dots with a given maximum frequency, the spacings from dot to dot will be smaller, resulting in a higher resolution, when the scanning speed is decreased.

Another possibility to change the print resolution is to switch between single-pass and multi-pass modes. Then, a second pass of a two-pass print mode, for example, could be used for printing additional ink dots in-between the dots that have been printed in the first pass, so that the print resolution is increased.

It will be understood that the print modes may also include modes in which the print resolution is different for the main scanning direction and the sub-scanning direction.

In general, printing an image with a high resolution requires more time than printing an image with a lower resolution. The reason is that not only the scanning speed will in most cases be lower when printing with a higher resolution, but also the raster image processing (RIP), i. e. the process in which specific density values are assigned to each pixel of the image, takes more time when the resolution is higher, and, accordingly, the number of pixels to be processed is larger. On the other hand, a higher print resolution will result in a better quality of a printed image.

It is an object of the invention to provide a further method which permits to print a raster image with a high perceived image quality in a shorter time.

In a prior disclosure, US2004/160478, segments comprising colour pixels and segments not comprising colour pixels have been discerned, wherein different print modes have been used for both types of segments, thereby reducing the required print time. However, if an image comprises colour pixels all over the image, this segmentation is not appropriate.

### SUMMARY OF THE INVENTION

In order to achieve the above mentioned object, the method according to the invention comprises the steps of:
- segmenting an image to be printed into segments that comprise a high-resolution segment and a low-resolution segment; and
- printing the segments in different print modes.

The invention takes advantage of the fact that, in the human visual system, the image resolution is different for different areas of the retina. Only a relatively small part of the perceived image, approximately in the center of the field of view, is projected onto the fovea of the retina, where the density of photoreceptor cells and, accordingly, the resolution is highest, whereas, in the marginal areas of the field of view, the resolution is significantly smaller, so that the details represented on a high-resolution printed image cannot be perceived, anyway.

When a human viewer watches a printed image, she or he will instinctively focus on a "field of interest" in the image where a high wealth of details is to be perceived. The segmentation step in the method according to the invention aims at identifying one or more of such areas of interest in the image to be printed, and these areas, of which it can be expected that they will be projected onto the fovea of the viewer, are printed with a higher resolution than the rest of the image.

Since the high resolution segments will normally cover only a relatively small fraction of the entire image, most of the image area can be printed with a lower resolution and, consequently, in shorter time, without any substantial loss in perceived image quality.

More specific optional features of the invention are indicated in the dependent claims.

The segmentation step may be performed manually by a user who watches the image to be printed on a monitor and then designates certain areas, e. g. with a rectangular shape, which shall constitute high resolution segments.

In another embodiment, the segmentation step may be an automated process executed by image processing software on a computer. For example, known face recognition software permits to distinguish human faces from other objects in an image to be printed. As a general rule, it will be desired to treat these human faces as areas of interest.

Similarly, it may be desired that areas of an image that contain text will be treated as areas of interest in order to improve the readability of the text.

The segmentation process may be applied to electronic representations of an image in any commonly used format such as PDF, TIFF, JPG and the like, including also electronic representations based on vector graphics or page description languages. If the electronic representation is a raster image already, the segmentation step may include calculating a contrast map showing structures in the image where there is a high contrast at borders between image areas with different color and brightness, and, as a rule, a high-resolution segment will be a segment in which the spatial frequency in such high contrast structures is the largest.

Depending on the type of printer, the low-resolution segments and the high-resolution segments may be printed in common scan passes or in separate scan passes. In the latter case, it is also possible to first print a continuous low-resolution image including also the high-resolution segments and then to print a high-resolution image so as to be superposed on the low-resolution background in the high-resolution segments.

In other embodiments, the printer may be controlled to switch from one print mode to another as the print head moves from a low-resolution segment to a high-resolution segment or vice versa.

In order to avoid visible artefacts on the borderline between a low-resolution and a high-resolution segment or vice versa, it is possible to smoothen the border by gradually fading-out the low-resolution image and fading-in the high-resolution image.

### BRIEF DESCRIPTION OF THE DRAWINGS

Embodiment examples will now be described in conjunction with the drawings wherein:
- Fig. 1: is an example of an image to be printed, segmented into a high-resolution segment and a low-resolution segment;
- Fig. 2: is an enlarged view of a high-resolution segment and its environment, showing individual pixels of the printed image;
- Fig. 3: is a schematic top plan view of a flat bed printer to which the invention is applicable;
- Fig. 4: is a top plan view of a transport-type printer;
- Fig. 5: is an example of a mask for softening the border of a high-resolution segment; and
- Fig. 6: is a flow diagram illustrating embodied steps of a method according to the invention.

### DETAILED DESCRIPTION OF EMBODIMENTS

The present invention will now be described with reference to the accompanying drawings, wherein the same or similar elements are identified with the same reference numeral.

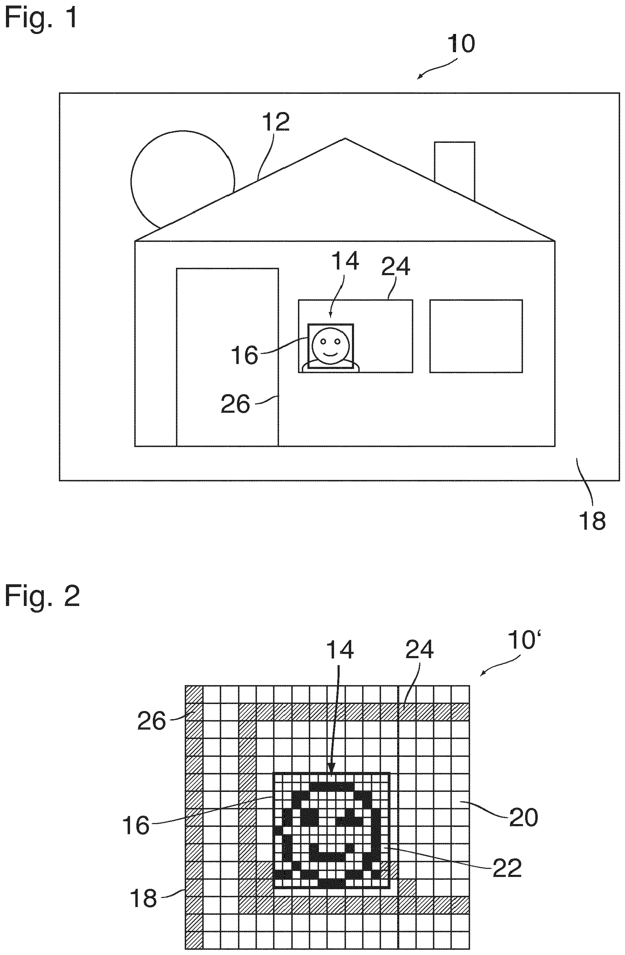

Fig. 1 is a simplified example of an image 10 to be printed. Most of the area of the image is constituted by a background 12 (silhouettes of a house and the sun) with relatively little detail. However, the image includes also a field of interest 14 which contains more detail, in this example a face seen in one of the windows of the house.

The image 10 may be considered to be represented by electronic data in any suitable format, e. g. a PDF file.

The image has been segmented into a relatively small high-resolution segment 16 which includes the field of interest 14, and a low-resolution segment 18 which, in this example, is constituted by the entire rest of the image outside of the high-resolution segment 16 and contains the background 12. The high-resolution segment 16 has a rectangular shape in this example. The segmentation may be done manually by a user who displays the image 10 on a computer screen and designates the coordinates of the corner points of the rectangle defining the segment 16.

The segmented image 10 is subjected to raster image processing (RIP) so as to obtain a raster image 10' (part of which is shown in Fig. 2) defined as an array of pixels 20, 22 with a specific color density values being assigned to each individual pixel. In the simple example shown here, the image is a black and white image, so that the density value is either "1", standing for a black pixel (hatched or black pixels in Fig. 2), or "0", standing for a white pixel. In case of a color image, several density values, one for each color, are assigned to each pixel.

The RIP process that has been employed for obtaining the raster image 10' has the outstanding feature that different print resolutions and, accordingly, different pixel sizes apply to the high-resolution segment 16 on the one hand and the rest of the image (low-resolution segment 18) on the other hand. Consequently, the pixels 20, 22 shown in Fig. 2 comprise relatively large macro-pixels 20, corresponding to a standard resolution of 600 dpi, for example, in the low-resolution segment 18 and smaller micro-pixels 22 in the high-resolution segment 16. In this example, the width and height of a micro-pixel 22 is only one half of the width and height of a macro-pixel 20, so that four micro-pixels 22 fit into one macro-pixel 20, and the print resolution in the high-resolution segment 16 is 1200 dpi.

As is shown in Fig. 2, a window frame 24 and a part of a door frame 26 (both shown also in Fig. 1), which belong to the background 12, are printed with the low resolution and therefore are relatively blurred in Fig. 2, whereas the face in the area of interest 14 is printed with the higher-resolution, so that more details are visible.

When a human viewer looks at the printed raster image 10', she or he will normally focus on the field of interest 14 and will therefore appreciate the high print resolution in the segment 16 while hardly noticing that the resolution is lower in the area of the background 12. Thus, a human viewer will rate the perceived quality of the printed image 10' as high, and will not notice that the actual quality is not quite as high as it would be in the case that the entire image had been printed with the high resolution. However, since the print resolution and the number of pixels 20 to be processed is significantly smaller in the low-resolution segment 18 which makes up most of the entire image, the time required for raster image processing and for printing the image 10' is significantly shorter than it would be for a like image printed entirely with the high resolution of 1200 dpi.

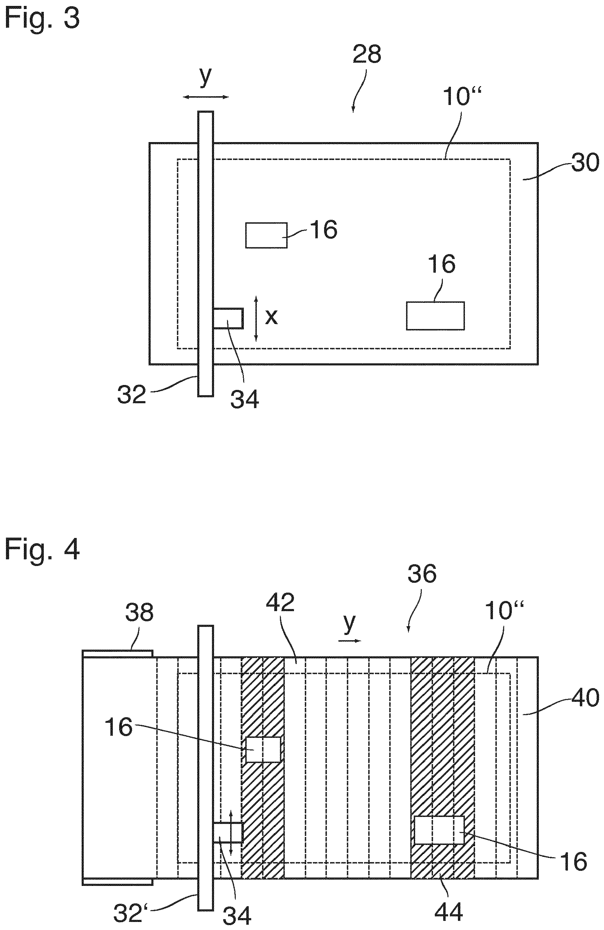

Fig. 3 is a schematic top plan view of a flat bed printer 28 having a flat bed 30, a gantry 32 arranged to move over the flat bed 30 in a sub-scanning direction y, and a print head 34 arranged to move along the gantry 32 in a main scanning direction x.

In this example, the image to be printed on the printer 28 is a raster image 10" which has two distinct high-resolution segments 16. Several print strategies may be used for printing the raster image 10".

In one embodiment, the print head 34 may be configured to print in a high-resolution print mode and a low-resolution print mode without changing the scanning speed. In that case, the area of the image 10" may be scanned two-dimensionally in a single-pass mode, and the print mode will be switched from low-resolution to high-resolution whenever the print head 14 enters a high-resolution segment 16, and back to low-resolution when the print head leaves the high-resolution segment.

In another embodiment, the print head 34 may be capable of printing in the high-resolution mode only when the scanning speed in the main scanning direction x is reduced. In that case, in order to avoid repeated deceleration and acceleration of the print head 34, a strategy may be used wherein the print head 34 first scans the entire area of the image 10" for printing the background in the low-resolution segment, the print head being idle when it moves over the high-resolution segments 16, and then the gantry and the print head will be moved to steer the print head successively to the high-resolution segments 16 and to scan these segments with reduced speed so as to fill-in the gaps that have been left in the first step.

In an alternative strategy that can be employed in this embodiment, the print head 34 may be active while passing over the high-resolution segments 16 in the first step in which its prints with low-resolution, so that any suitable background is also printed in the high-resolution segments 16. Then, in the high-resolution print mode, high-resolution images will be superposed on the background in the segments 16.

Another option would be to use a multi-pass mode at least for printing the high-resolution images in the segments 16. For example, a two-pass mode could be used in the low-resolution print mode and a four-pass mode could be used in the high-resolution print mode.

Fig. 4 shows an example of a transport-type printer 36 with a stationary gantry 32' and a media transport mechanism 38 (e. g. a roller) for advancing a recording medium in the sub-scanning direction y (unidirectionally) over a print surface 40. In that case, the print head 34 prints swathes 42 of the image 10" while moving back and forth along the gantry 32'. After each swath, the recording medium is advanced by the width of the swath in the sub-scanning direction y. In that case it is convenient when the swathes 42, 44 are printed one after the other, from right to left in Fig. 4, while the recording medium is advanced intermittently, and the print mode of the print head 34 is switched to high-resolution for the entire swathes 44 which contain at least a portion of a high-resolution segment 16. In other respects the print strategies may be analogous to the strategies described in conjunction with Fig. 3.

In another embodiment, the gantry 32' may be replaced by a page wide print head which extends over the entire width of the recording medium. Then, the recording medium may be advanced continuously, possibly with a higher speed in the low-resolution mode and a lower speed in the high-resolution mode.

In general, when the print resolution changes abruptly at the borderline between a high-resolution segment 16 and a low-resolution segment 18, this may create visible artefacts at the borderline. In order to eliminate or mitigate these artefacts, it is convenient to gradually fade-in the high-resolution mode when the print head enters a high-resolution segment 16 and to fade-out the low-resolution mode accordingly.

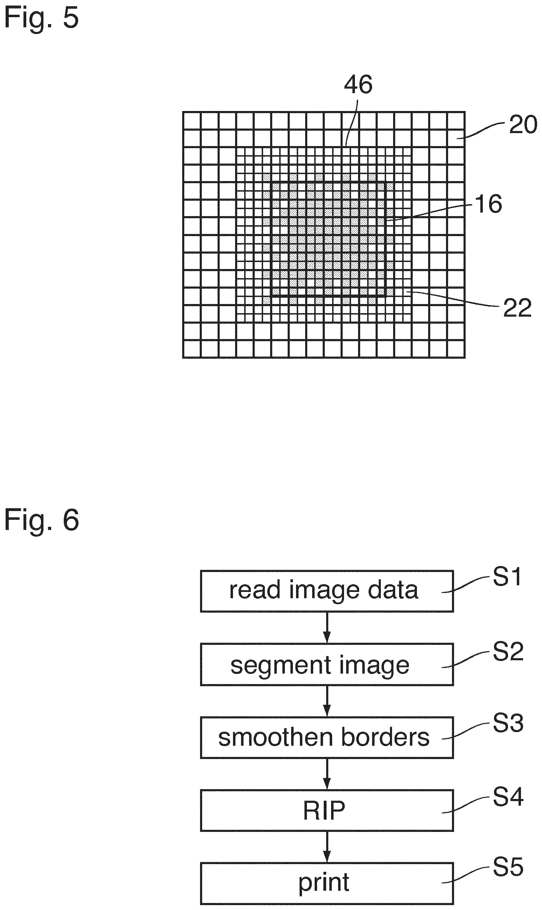

Fig. 5 shows a mode mask 46 that may be used for that purpose. The mode mask 46 is a matrix of micro-pixels 22 corresponding to the micro-pixels for the high-resolution print mode. The macro-pixels 20 for the low-resolution print mode may be considered as groups of four micro-pixels 22 each. When printing the background in a low-resolution segment, a specific color density value is assigned to each macro-pixel 20. When printing with high resolution in the high-resolution segment 16, a specific color density value is assigned to each individual micro-pixel 22. The mask 46 indicates for each of the micro-pixels 22 whether the color density value for the micro-pixel shall be the color density value that would be printed in the high-resolution print mode (hatched micro-pixels in Fig. 5) or the color density value that would be printed in the low-resolution print mode, e. g. the uniform color density value of the entire macro-pixel 20 to which the micro-pixel belongs.

As can be seen in Fig. 5, the mask has been designed such that the density of hatched micro-pixels is 100% in the core of the high-resolution segment 16 but gradually decreases from inside to outside when crossing the border of the segment 16. Thus, when the print head crosses the border from outside the segment 16 to inside the segment, the number of micro-pixels whose density value is determined by the high-resolution print mode will gradually increase to 100 %.

The essential steps of a printing method according to the invention are shown in Fig. 6.

In the step S1, the image data are read from an electronic file, e. g. a PDF file.

Step S2 is the segmentation step in which the image is segmented into the high-resolution segments 16 and the low-resolution segments 18, either manually or by means of a suitable algorithm. Of course, if the printer has print modes with three or more different print resolutions, then there may be more than two classes of segments, e. g. low-resolution segments, intermediate-resolution segments and high-resolution segments.

Once the segments have been determined, the borders of the segments are smoothened in step S3, e. g. by applying masks of the type of the mask 46 in Fig. 5.

The subsequent step S4 is a step of raster image processing in which the color density values are applied to the micro-pixels 22 inside the masks 46 and uniform density values are applied to the macro-pixels 20 outside the masks 46.

Finally, in step S5, the raster image data are sent to the printer such as the printer 28 or 36 for being printed.

The invention being thus described, it will be obvious that the same may be varied in many ways. Such variations are not to be regarded as a departure from the scope of the invention, and all such modifications are intended to be included within the scope of the following claims.

## Claims

1. A method of printing a raster image (10'; 10") on a printer (28; 36) which has at least two print modes for printing with different print resolutions, the method comprising the steps of;
- segmenting an image (10) to be printed into segments (16, 18) that comprise a first segment (16) and a second segment (18), the first segment having a higher resolution than the second segment; and
- printing the first and second segments (16, 18) in different print modes.

2. The method according to claim 1, wherein the step of segmenting includes identifying in the image (10) to be printed at least one zone of interest (14) in which the image comprises the highest level of detail, and defining a first segment (16) that contains said at least one zone of interest (14).

3. The method according to claim 1 or 2, comprising a smoothening step wherein borders between a first segment (16) and a second segment (18) are smoothened by specifying a pattern according to which the print mode is blended gradually from a low-resolution print mode to a high-resolution print mode when the borderline is crossed from the second segment towards the first segment (16), and the resolution is gradually blended from the high-resolution print mode into the low-resolution print mode when the borderline is crossed from the first segment (16) towards the second segment (18).

4. The method according to claim 3, wherein an image area that contains a first segment (16) is divided into macro-pixels (20) for low-resolution printing and into micro-pixels 22 for high-resolution printing such that each macro-pixel (20) contains a plurality of micro-pixels (22), and wherein the smoothening step comprises employing a mask (46) which specifies for each micro-pixel (22) in said image area whether its content is determined by the high-resolution print mode or by the low-resolution print mode.

5. The method according to any of the preceding claims, wherein the step of printing comprises printing, in the low-resolution print mode, a first layer of an image that covers the second segment (18) and the first segment (16), and printing, in the high-resolution print mode, a second layer that superposes the first layer only in the first segment (16).

6. The method according to any of the preceding claims, wherein the printing step is performed on a printer (28; 36) having a scanning-type print head (34) and the printing step comprises using different scanning speeds of the print head (34) in the different print modes.

7. The method according to any of the claims 1 to 5, wherein the step of printing is performed on a printer (28; 36) with a scanning-type print head (34), the printer having at least one multi-pass print mode, and the printing step comprises using print modes with a different number of passes for high-resolution and low-resolution.

8. The method according to any of the claims 1 to 5, wherein the printing step is performed on a printer having a page wide print head and the printing step comprises using different advancing speeds of the print head relative to a recording medium in the different print modes.

9. A method of raster image processing an image (10) that has been segmented into segments that comprise a first segment (16) and a second segment (18), the method comprising rasterizing the image data for the first segment (16) and the second segment (18), wherein the first segment has a higher resolution than the second segment.

10. A raster image processor configured to perform the method according to claim 9.

11. A computer program product embodied on a non-transitory computer-readable medium, comprising program code, which, when executed on a raster image processor, causes the raster image processor to perform the method according to claim 9.
